# EUROPEAN PATENT APPLICATION

(11) **EP 4 016 807 A1**
(43) Date of publication of application: **22.06.2022**
(21) Application number: 20214931.6
(22) Date of filing: 17.12.2020
(51) Int. Cl.: H02K 5/20

(54) **STATOR COOLING JACKET DEVICE FOR AN ELECTRIC MOTOR, METHOD FOR ASSEMBLING A STATOR COOLING JACKET DEVICE AND AN ELECTRIC MOTOR WITH A STATOR COOLING JACKET DEVICE**

(71) Applicant: Rolls-Royce Deutschland Ltd & Co KG, 15827 Blankenfelde-Mahlow (DE)
(72) Inventor: Kutrovich Dániel,, H-2013 Pomáz (HU); Szücs Marcell,, H-4431 Nyiregyháza (HU); Dorogi János,, H-2314 Halásztelek (HU); György Balázs Gergely,, H-1034 Budapest (HU); Petró Zoltán,, H-2737 Cegledbercel (HU)
(74) Representative: Maikowski & Ninnemann Patentanwälte Partnerschaft mbB

(57) **Abstract**

The invention relates to a stator cooling jacket device (10) for an electric motor (20), wherein at least one heat transfer area device (1) is thermally coupled radially on the outside of a stator (21) of the electric motor (20) and also thermally coupled with a fluid flow means (2) comprising at least one conduit or channel (3, 3A, 3B) for a heat transfer fluid (F). The invention further relates to a method for assembling a stator cooling jacket device and an electric motor (20) with a stator cooling jacket device (10).

## Description

This application relates to a stator cooling jacket device for an electric motor with the features of claim 1, a method for assembling a stator cooling jacket device with the features of claim 13 and an electric motor with a stator cooling jacket device with the features of claim 14.

Electric motors are used e.g. in aircrafts, in particular in connection with propulsion units which drive propellers. Such electric motors generate a significant amount of heat during operation, which needs to be removed from the electric motor.

Therefore, means are required to handle heat loads generated by those electric motors.

This is addressed by the stator cooling jacket device with the features of claim 1.

The stator cooling jacket device comprises at least one heat transfer area device which is thermally coupled radially on the outside of a stator of the electric motor. The heat transfer area device is also thermally coupled with a fluid flow means comprising at least one conduit or channel for a heat transfer fluid. Therefore, the heat load from the electric motor is received by the heat transfer fluid via the heat transfer area device. In particular, for aviation application of electrical and hybrid electrical propulsion systems the power density and lightweight design is crucial. The stator cooling jacket device allows for an efficiently manufacturable and lightweight part.

The heat transfer area device can e.g. be a thermally conductive part, which is connected with the fluid flow means or is machined in one part with the fluid flow means.

To prevent - or at least limit - a leaking of the heat transfer fluid, sealing means are positioned in one embodiment between the fluid flow means and a casing of the stator cooling jacket device. Additionally or alternatively, the sealing means comprise a press fit or intermediate fit between the fluid flow means and a casing of the stator cooling jacket device.

In an embodiment, where the heat transfer area device and the fluid flow device are two separate parts, means can be positioned between the fluid flow means and the heat transfer area device of the stator cooling jacket device to prevent or limit a leaking of the heat transfer fluid there.

The sealing means can also further comprise or consist of a glue and optionally an O-ring.

In a further embodiment, the fluid flow means comprises conduits or channels in which at least in parts a plurality of additional heat transfer devices, in particular fins, ribs or pins, are positioned. Those devices enlarge the heat transfer area within the channels or conduits in which the heat transfer fluid flows.

Furthermore, in one embodiment at least one inlet and at least one outlet is provided for the heat transfer fluid. With this, a steady or controlled flow of the heat transfer fluid through the channels or conduits can be realized. In particular, the flow of the heat transfer fluid can be split into more than one channel conduit downstream from the at least one inlet.

To allow for an efficient covering of the outside area of the electric motor, the at least one conduit or channel can have changing flow directions for the heat transfer fluid in the fluid flow means. For example, the at least one conduit or channel has at least one meandering section in the fluid flow means. With this, the channel - and thereby the heat transfer fluid - can cover a larger area efficiently.

The cross-section of the channels or conduits in one embodiment is at least in parts rectangular or curved, as this shape can be efficiently manufactured by machining, molding or an additive manufacturing.

For a typical application for a propulsive unit in an aircraft, the heat transfer area device has a circular cylindrical cross-section with a diameter of more than 300 mm. In a similar application, an embodiment uses a heat transfer fluid having a temperature at an outlet that is a few degrees higher than at the inlet. In an aircraft application, the heat transfer fluid is oil or a phase change medium.

Geometrical complex parts, as e.g. embodiments of the fluid flow means, can at least be partially manufactured with an additive process, in particular a 3D-printing process, a molding, a casting process or a milling process.

The heat transfer area device and the fluid flow means can be machined in one piece and thereby reduce the risk of extra leaks.

In one embodiment, the fluid flow means and the casing are ring-like structures fitting well with the overall shape of the electric motor. The ring-like structure could also be considered as a cylindrical shell.

As the stator cooling jacket device is subject to heat loads, one embodiment can have the materials of the fluid flow means and the casing being the same or having at least very similar thermal expansion coefficients (e.g. aluminum). This reduces the risk of mechanical stresses at the sealing means and the risk of leaking.

The issues raised here are also addressed by a method with the features of claim 13. In a first step, a ring-like casing of the stator cooling jacket device is thermally treated so that its diameter expands. Subsequently, the ring-like casing is heat-shrunk onto a ring-like fluid flow means with the channels or conduits embedded. This is an efficient way in combining those parts.

In one embodiment of the method, glue is applied to an interface surface of a ring-like fluid flow means comprising at least one conduit or channel for a heat transfer fluid before the heat-shrinking step.

The issues are also addressed by an electric motor with the features of claim 14. As mentioned before, in one embodiment the electric motor is coupled to an electric propulsion unit of an aircraft. This can be coupled to a full electric propulsion system or a hybrid propulsion system.

Embodiments are described in an exemplary way in connection with the Figures.
- Fig. 1: shows a schematic cross-sectional view of an electric motor with an embodiment of a stator cooling jacket device;
- Fig. 2: shows a perspective view of a part of an embodiment of a stator cooling jacket device;
- Fig. 3: shows a detail of a fluid flow means as a part of an embodiment of a cooling jacket device;
- Fig. 4: shows a detail of an inlet and an outlet region for a heat transfer fluid in the fluid flow means;
- Fig. 5: shows a first step of a method for an assembly of a stator cooling jacket device;
- Fig. 6: shows a second step of a method for the assembly of a stator cooling jacket device;
- Fig. 7: shows a third step of a method for the assembly of a stator cooling jacket device;
- Fig. 8a: shows a detail of a channel with a heat transfer device;
- Fig. 8b: shows a detail of a channel with a further alternative heat transfer device;
- Fig. 8c: shows a detail of a channel with a further alternative heat transfer device.

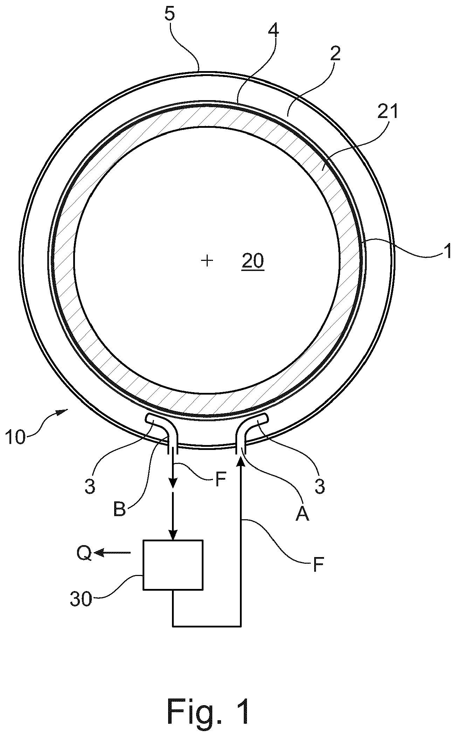

In Fig. 1, a cross-sectional view of an electric motor 20 is shown, as seen in the direction of the rotational axis of the electric motor 20.

The details of the electric motor 20, e.g. the rotor, are - for the sake of simplicity - not shown in detail here. The rotor is radially surrounded outwards by a stator 21. As heat is generated within the electric motor 20, it needs to be removed from the electric motor 20.

As will be shown below in connection with the described embodiments, the heat is not removed by e.g. convention cause by cooling air, which is forced through the electrical motor. The heat transfer described here is essentially in radial direction.

The generated heat is removed by using a stator cooling jacket device 10, wherein at least one heat transfer area device 1 is thermally coupled radially on the outside of the stator 21 of the electric motor 20 and it is also thermally coupled with a fluid flow means 2 comprising at least one conduit or channel 3 for a heat transfer fluid F. The heat transfer fluid F (e.g. oil) is used to remove the heat from the electric motor 20.

The stator cooling jacket device 10 comprises in this embodiment three layers that are positioned concentrically around the stator 21.

The innermost layer is the heat transfer area device 1. This comprises or is made of material with a high heat thermal conductivity, such as a metal (e.g. copper or aluminum). This layer provides the heat transfer area for the heat generated within the electric motor 20.

Radially outward from this layer and thermally coupled with this is the fluid flow means 2 comprising the at least one channel 3 for circulating the heat transfer fluid F. In principle, the fluid flow means 2 can be designed in one piece with the heat transfer area device 1, as it could be machined from one aluminum piece. But it is also possible, that the fluid flow means 2 can be manufactured from a material with a relatively low heat conductivity, such as e.g. a polymer material which is then thermally coupled or connected with the heat transfer area device 1.

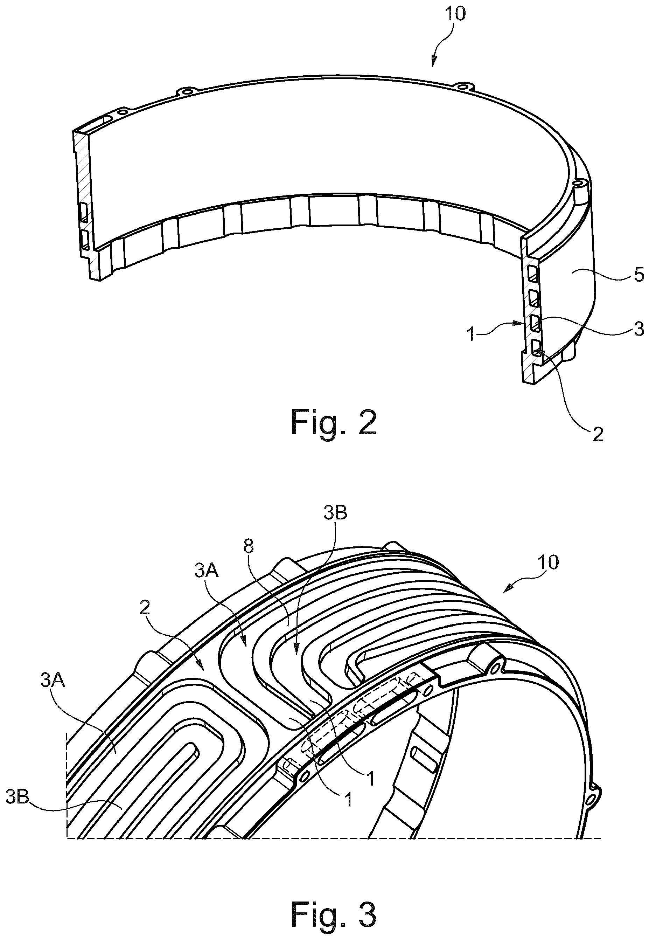

As the fluid flow means 2 comprises channels or conduits 3 for the heat transfer fluid F (only schematically shown in Fig. 1; see also e.g. Fig. 3), the material chosen should allow efficient manufacturing.

Radially further outward is the casing 5 of the stator cooling jacket device 10. In the embodiment shown here (see also Fig. 2 and 3), the channels 3 are open on the radial outside and covered by the casing 5 on the outside. To prevent leakages, a sealing means 4 is positioned between the fluid flow means 2 and the casing 5. The sealing means 4 can comprise a glue that bonds the fluid flow means 2 and the casing 5 together. The sealing means 4 can additionally or alternatively comprise a press fit or an intermediate fit between the fluid flow means 2 and the casing 5. A further optional sealing means is an O-ring (not shown here) in the outer surface of the fluid flow means 2 or the inner surface of the casing 5.

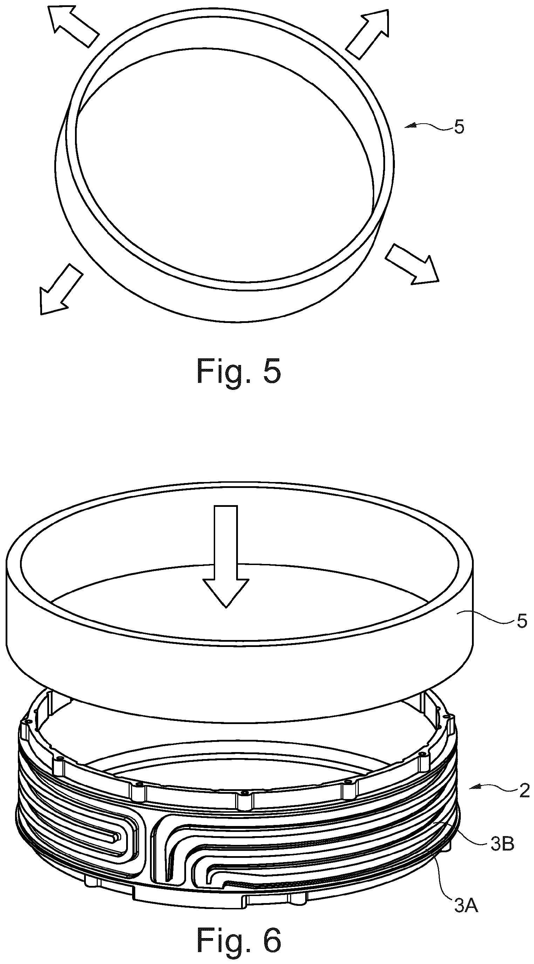

As will become clear from an embodiment discussed in connection with Fig. 5 and 6, the fluid flow means 2 and the casing 5 can be two separate parts. In that case, the materials should be the same or at least have very similar thermal expansion coefficients to prevent or limit leakage of the heat transfer fluid F.

But it is also possible to manufacture the fluid flow means 2 and the casing 5 in one process step, e.g. by an additive manufacturing method from a temperature resistant polymer (e.g. polyamid) or metal powder, such as aluminum. The casing 5 in this embodiment would be the outer wall of the stator cooling jacket device 10.

The heat transfer fluid F enters the fluid flow means 2 through an inlet A with a relatively cool temperature (e.g. 40° C) and leaves the fluid flow means 2 through an outlet B having a higher temperature (e.g. 120° C). In alternative embodiments, more than one pair of inlets (A) and outlets (B) can be used allowing a plurality of heat transfer flows in the fluid flow means 2.

The heat Q is removed from the heat transfer fluid F by a cooling in a heat exchanger 30. The heat sink could be e.g. the ambient air (not shown here). The cooled down heat exchange fluid F is then returned to the fluid flow means 2 or can be used elsewhere in an aircraft (e.g. as lubricant). The heat exchanger 30 can comprise a control system (not shown here) which measures the outlet temperature of the heat transfer fluid F. If the temperature is too high, the flow rate of the heat transfer fluid F to the fluid flow means 2 can be increased and / or its inlet temperature can be decreased by additional cooling.

In Fig. 2, a perspective view of a ring-like stator cooling device 10 is shown covering circumferentially the electrical motor 20 (not shown here). The ring-like stator cooling device 10 is cut so that the channels (or conduits) 3 in the fluid flow means 2 are visible in this view. The cut view shows four cross-sections of channels 3. The bottom of the channels 3A, 3B faces the heat transfer area device 1, which conducts the heat from the electric motor 20 (not shown here) to the heat transfer fluid F. The sidewalls of the channels 3A, 3B are straight walls, so that the cross-sections of the channels 3 are rectangular.

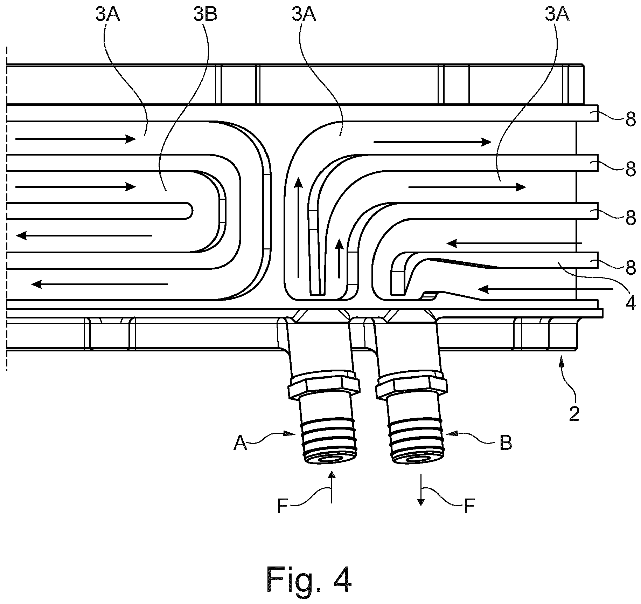

Fig. 3 shows the embodiment of the stator cooling device 10 of Fig. 2 in a perspective view with the casing 5 removed. Hence, the channels 3A, 3B can be seen in more detail. In fact, there are two channels 3A, 3B, as it is shown in connection with Fig. 4. In Fig. 4, the same part of the stator cooling device 10 is shown in a top view. In addition, the inlet A and the outlet B for the heat transfer fluid F are shown.

The heat transfer fluid F entering the stator cooling device 10 is split into two channels 3A, 3B respectively, which then run in parallel around the circumference of the fluid flow means 2. In the left half of Fig. 4 (and also in the left half of Fig. 3) it can be seen that channels 3A, 3B are changing the direction once the channels 3A, 3B have completed their path around the electric motor 20 (not shown here). The changes of directions here are 180° turns, i.e. the heat transfer fluid F is returning in parallel channels 3A, 3B to the outlet B that can be seen on the right hand side of Fig. 4.

Here, the channels 3A, 3B have rectangular cross-sections. In alternative embodiments, the cross-section can be quadratic or curved (e.g. half-circle). The cross-section does not have to constantly be around the circumference of the fluid flow means 2. The shape and size of the channels 3A, 3B can be adapted to a changing viscosity of the heat transfer fluid F.

In the embodiment shown in Fig. 2 to 4, the paths of the channels 3A, 3B reverse by 180°C resulting in hair-pin curves. In alternative embodiments, the paths of the channels 3A, 3B can make more than one turn resulting in a serpentine or meandering pattern.

As best seen in Fig. 4, the walls separating the channels 3A, 3B have an upper surface which serves as an interface surface 8 to which glue and other sealing means 4 can be applied to. The sealing means 4 are indicated in Fig. 4 by a shading on the interface surface 8.

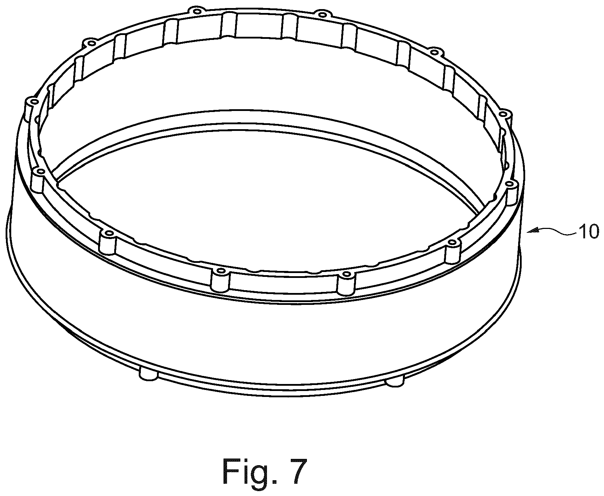

In Fig. 5 to 7, the assembly of a fluid flow means 2 and a casing 5 to a stator cooling jacket device 10 (see Fig. 7) is shown. The fluid flow means 2 comprises the channels or conduits 3A, 3B which are e.g. milled into the material or which are manufactured using an additive process such as 3D-printing.

Before the assembly, in a first step the ring-like casing 5 is warmed (see arrows in Fig. 5) so that the diameter dilates sufficiently that the casing 5 can be positioned on the outside of the fluid flow means 2 (see arrow in Fig. 6) in a second step.

Before that, glue is applied as a sealing means 4 to the interface surfaces 8 of the fluid flow means 2 (see Fig. 4) providing the sealing of the heat transfer fluid F in the channels 3A, 3B.

In an alternative embodiment, the sealing means 4 is realized by a press fit or an interference fit which is designed (e.g. by the warming of the casing 5 in the first step). If used together with the glue as sealing means, the surfaces will be shrink fit tightly together.

The appropriate press fit or interference fit should be determined between the casing 5 and the fluid flow means 2 not to have any leakage problem at the highest pressure conditions considered.

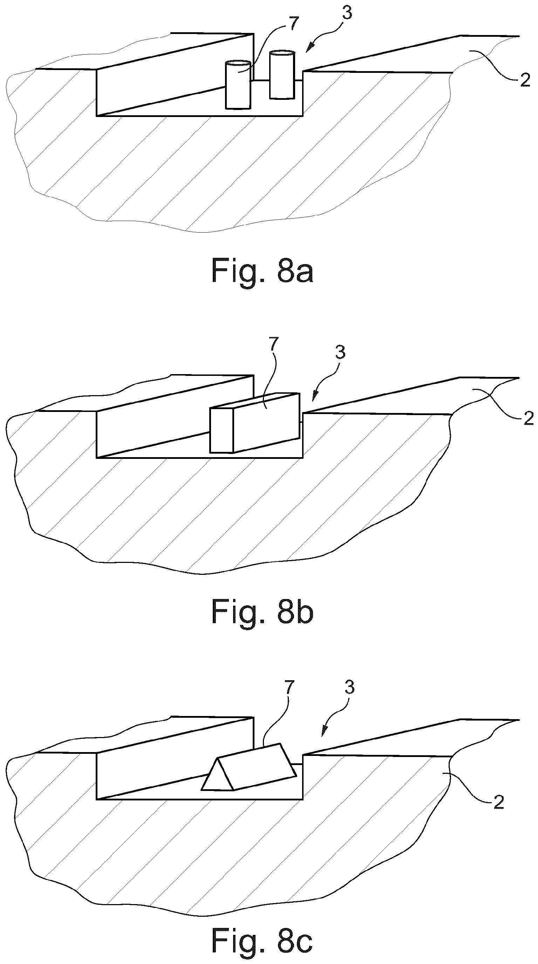

In Fig. 8a to 8c, further enhancements for the heat transfer from the electrical motor 20 (not shown here) are described. Fig. 8a and 8b show details of two embodiments of channels 3 in the heat flow means 2.

To increase the heat transfer area for the heat flow from the electric motor 20 to the heat transfer fluid F, extra heat transfer devices 7 are positioned within the channel 3.

In Fig. 8a, two cylindrical pins 7 are used to increase the contacting area of the heat transfer fluid. The pins 7 could be e.g. efficiently manufactured by an additive manufacturing method, such as 3D printing.

In Fig. 8b, a fin 7 with a rectangular cross-section is placed in the channel 3, in Fig. 8a a fin 7 with a triangular cross-section.

The person skilled in the art will recognize that different heat transfer devices 7 can be combined and that the placement of the heat transfer devices 7 can be adjusted to a wide range of flow conditions and thermal conditions.

It will be understood that the invention is not limited to the embodiments above described and various modifications and improvements can be made without departing from the concepts described herein. Except where mutually exclusive, any of the features may be employed separately or in combination with any other features and the disclosure extends to and includes all combinations and sub-combinations of one or more features described herein.

### Reference numbers

- 1: heat transfer area device
- 2: fluid flow means
- 3: conduit / channel for heat transfer fluid
- 4: sealing means
- 5: casing of stator cooling jacket device
- 7: heat transfer devices in fluid flow means
- 8: interface surface
- 10: Stator cooling jacket device
- 20: electric motor
- 21: stator
- 30: heat exchanger
- A: inlet for heat transfer fluid
- B: outlet for heat transfer fluid
- F: heat transfer fluid
- Q: heat removal

## Claims

1. Stator cooling jacket device (10) for an electric motor (20), wherein at least one heat transfer area device (1) is thermally coupled radially on the outside of a stator (21) of the electric motor (20) and also thermally coupled with a fluid flow means (2) comprising at least one conduit or channel (3, 3A, 3B) for a heat transfer fluid (F).

2. Stator cooling jacket device (10) according to claim 1, wherein sealing means (4) are positioned between the fluid flow means (2) and a casing (5) of the stator cooling jacket device (10) and / or by a press fit or intermediate fit between the fluid flow means (2) and a casing (5) of the stator cooling jacket device (10).

3. Stator cooling jacket device (10) according to claim 1 or 2, wherein sealing means (4) are positioned between the fluid flow means (2) and the heat transfer area device (1) of the stator cooling jacket device (10), in particular wherein the sealing means (4) comprise a glue and optionally an O-ring.

4. Stator cooling jacket device (10) according to at least one of the preceding claims, wherein the fluid flow means (2) comprises conduits (3, 3A, 3B) or channels in which at least in parts a plurality of additional heat transfer devices (7), in particular fins, ribs or pins, are positioned.

5. Stator cooling jacket device (10) according to at least one of the preceding claims, wherein at least one inlet (A) and at least one outlet (B) is provided for the heat transfer fluid (F), in particular wherein the flow of the heat transfer fluid (F) is split into more than one channel (3, 3A, 3B) or conduit downstream from the at least one inlet (A).

6. Stator cooling jacket device (10) according to at least one of the preceding claims, wherein the at least one conduit or channel (3, 3A, 3B) changes flow directions for the heat transfer fluid (F) in the fluid flow means (2), in particular wherein the at least one conduit or channel (3, 3A, 3B) has at least one meandering section in the fluid flow means (2).

7. Stator cooling jacket device (10) according to at least one of the preceding claims wherein the cross-section of the channels or conduits (3, 3A, 3B) is at least in parts rectangular or curved.

8. Stator cooling jacket device (10) according to at least one of the preceding claims wherein the heat transfer area device (1) has a circular cylindrical cross-section with a diameter of more than 300 mm.

9. Stator cooling jacket device (10) according to at least one of the preceding claims, wherein the heat transfer fluid is oil or a phase change medium.

10. Stator cooling jacket device (10) according to at least one of the preceding claims, wherein the fluid flow means (2) is at least partially manufactured with an additive process, in particular 3D-printing, a molding, a casting process or a milling process.

11. Stator cooling jacket device (10) according to at least one of the preceding claims, wherein the heat transfer area device (1) and the fluid flow means (2) are machined in one piece.

12. Stator cooling jacket device (10) according to at least one of the preceding claims, wherein the fluid flow means (2) and the casing (5) are ring-like structures or wherein the materials of fluid flow means (2) and the casing (5) are the same or have at least very similar thermal expansion coefficients.

13. Method for assembling a stator cooling jacket device (10) according to at least one of the claims 1 to 12, wherein
a) a ring-like casing (5) of the stator cooling jacket device (10) is thermally treated and
b) the ring-like casing (5) is heat-shrunk onto the ring-like fluid flow means (2).

14. Method according to claim 13, wherein, before the heat-shrinking step, glue is applied to an interface surface (8) of a ring-like fluid flow means (2) comprising at least one conduit or channel (3, 3A, 3B) for a heat transfer fluid (F).

15. Electric motor (20) with a stator cooling jacket device (10) according to at least one of the claims 1 to 12, in particular wherein the electric motor (20) being coupled to an electric propulsion unit of an aircraft, in particular the electric motor (20) being coupled in a full electric propulsion system or a hybrid propulsion system.
